# EUROPEAN PATENT SPECIFICATION

(11) **EP 3 381 776 B1**
(45) Date of publication and mention of the grant of the patent: **11.11.2020**
(21) Application number: 18164971.6
(22) Date of filing: 29.03.2018
(51) Int. Cl.: B62J 17/10, B62J 17/06, B62K 11/10

(54) **A STEP-THROUGH SCOOTER TYPE VEHICLE**
ROLLERARTIGES FAHRZEUG MIT TIEFEM EINSTIEG
VÉHICULE DE TYPE SCOOTER AVEC REPOSE-PIED

(30) Priority: 31.03.2017 IN 201741011633
(43) Date of publication of application: 03.10.2018
(73) Proprietor: TVS Motor Company Limited, Chennai 600006 (IN)
(72) Inventor: Kotnis, Yogesh Chandrakant, 600 006 Chennai (IN); Tennison, Koilpillai Christopher, 600 006 Chennai (IN); Ram, Sundararaman Ganesh, 600 006 Chennai (IN); Payne, Kanika, 600 006 Chennai (IN); Shanmugam, Palani, 600 006 Chennai (IN); Rao, Bhusam Syamala, 600 006 Chennai (IN)
(74) Representative: Patentanwaltskanzlei Matschnig & Forsthuber OG

(56) References cited:
- EP-A2- 1 958 860
- JP-A- 2004 291 700
- JP-U- S6 377 885
- US-A1- 2008 202 835

## Description

### FIELD OF THE INVENTION

The present invention relates to a step through type vehicle and particularly but not exclusively to a front structure assembly for the step through type vehicle.

### BACKGROUND OF THE INVENTION

Typically, vehicle layout design for a step-through type scooter type motorcycle features a step-through frame and a flat surface called as a floorboard used for disposing legs of a rider when the rider puts his/her feet on the floorboard. Further, the scooter features bodywork, including a front leg shield and body that conceals all or most of the mechanisms.

Generally, in a step-through type scooter type motorcycle, frame structure is such that an internal combustion (IC) engine is positioned in the forward direction of the vehicle. The IC engine is positioned in a manner such that the cylinder head is either horizontal or inclined forwardly. Typically, in the scooter type motorcycle, an air intake system is disposed below a seat.

The internal combustion (IC) engine comprises of the air intake system, which supplies air required for operation of the IC engine. The air is drawn in by the intake system due to vacuum created in the combustion chamber, during an intake stroke. The air drawn is mixed with fuel at a desired ratio and combusted in the IC engine during a compression stroke of the engine. The combustion of the air-fuel mixture will result in a power stroke. To generate a desired torque and power the air intake system plays a vital role.

Published patent document JP 2004-291700 deals with a vehicle body cover structure in motorcycle. Particularly, the document seeks to avoid the problem of water entry into the engine through an opening while also enabling heat dissipation/extraction from the engine. The patent document proposes a louvre structure disposed in an engine compartment cover/body side cover for extracting heat away from the engine.

Another patent document JP S63 77885U proposes a detachable louvre structure to be attached to a rear cover member of the vehicle.

A motorcycle has been proposed in which a radiator thereof is cooled by an air duct member formed in a recess provided in an inner panel disposed behind the front fender and in front of the radiator in EP1958860A2.

Published document US2008-202835 discloses a body cover for a motorcycle which not only serves to cover at least part of body frame for preventing projection of cables to the outside, but also serves to cool the neighborhood of the engine. Particularly, the document discloses a motorcycle which constitutes a step-through scooter type vehicle according to the preamble of claim 1 and has a a headlamp assembly housed in a front structure including a top front panel, and one or more front bottom panels or leg shields extending vertically downwards from a lowermost surface of the top front panel. Further, the one or more front bottom panels extend rearwardly downwardly from the lowermost surface to a forward most edge of a floorboard assembly. Particularly the one or more front bottom panels includes a tapered portion disposed at a joining junction between at least a portion of the top front panel and at least a portion of said one or more front bottom panels. An opening is formed in a leg shield portion of the one or more front bottom panels for cooling the engine.

However, besides cooling the engine there is also a need to cool a contemporary headlamp structure comprising a plurality of LEDs which emit huge amount of heat.

### BRIEF DESCRIPTION OF DRAWINGS

The above and other features, aspects and advantages of the subject matter will be better understood with regard to the following description, appended claims and accompanying drawings where:
**Fig. 1** shows a side view of the scooter type vehicle.
**Fig. 2** illustrates an air flow path through the front bottom panel towards the engine assembly.
**Fig. 3** illustrates a portion of a perspective view of the scooter type vehicle.
**Fig. 4** illustrates a front view of a front portion of the vehicle.
**Fig. 5** illustrates a sectional view of the at least one louvre assembled with the one or more front bottom panels taken along **pq** axis as shown in the **Fig. 4****.**
**Fig. 6a** illustrates a front view of a left front bottom panel according to an embodiment of the present invention.
**Fig. 6b** illustrates a cut-out on the left front bottom panel.
**Fig. 6c** illustrates a rear view of at least one louvre.
**Fig. 7a** illustrates a front perspective view of the at least one louvre according to an embodiment of the present invention.
**Fig. 7b** illustrates a rear view of the at least one louvre according to an embodiment of the present invention.
**Fig. 8** illustrates a detailed view of a portion of the top front panel and the left front bottom panel.
**Fig. 9** illustrates a detailed view of an assembly of a portion of the top front panel and the left front bottom panel.

### DETAILED DESCRIPTION OF THE INVENTION

Generally, a two-wheeled vehicle comprises a handlebar assembly that is easily accessible to the rider seated behind the handlebar assembly. Conventionally, the handlebar assembly also houses a headlamp assembly. Such a handlebar assembly, that is easily operable by the rider is made compact and does not include any other parts packaged into it. Further, an engine assembly is disposed rearwardly to a floorboard assembly, but at a different plane than that of the handlebar assembly. Typically, the engine assembly is disposed at a lower plane that is same as that of the floorboard board. This lower plane is lower to the plane comprising the handlebar assembly. Since, most of the parts in the scooter type vehicle are concealed by one or more body panels, such vehicular parts dissipate a lot of heat. Cooling of such vehicular parts concealed by the body panels becomes a challenging task. Further, the cooling of the engine assembly disposed rearwardly to the floorboard assembly is carried either through natural cooling or forced air cooling. For such an arrangement requires other additional vehicular parts capable of cooling the engine assembly and other vehicular parts.

Further, a step-through scooter type vehicle also comprises a headlamp assembly disposed in a front portion of the vehicle and below the handlebar assembly. In recent times, the headlamp assembly comprising one or more light emitting diodes (LEDs) as illuminating members are preferred for their efficient and effective lighting. The headlamp assembly usually comprises plurality of LEDs depending upon the requirement of the intensity of the light. The plurality of LEDs emits a huge amount of heat. The heat so emitted is transferred to the surrounding vehicular parts; this may affect the normal functionality of the surrounding vehicular parts. The headlamp assembly disposed in the front portion of the vehicle and below the handlebar assembly is closer to the plane comprising the engine assembly. The heat dissipated from the headlamp assembly also affects a portion of the engine assembly. The heat dissipated from the headlamp assembly is transferred towards the floorboard assembly and eventually to a cylinder head portion of the engine assembly disposed rearwardly to the floorboard assembly.

During vehicle running condition, due to forward motion of the vehicle, the heated air that travels downwards is forced to quickly move towards the vehicle rear portion and thereby encounters the cylinder head portion of the engine assembly. The already heated engine assembly due to its operation is further heated up due to heated air transferred from the headlamp assembly. This may affect the normal functionality of the engine assembly.

Further, the front portion of the scooter-type vehicle also includes a battery assembly disposed rearwardly and at a close proximity to the headlamp assembly. The battery operation itself produces some amount of heat and further, the heat emitted by the LEDs also is transferred to the battery. Therefore, this might lead to reduced battery life and results in frequent replacement of the battery in the vehicle. For the purpose of which, the vehicle requires frequent servicing.

Furthermore, the scooter type vehicle comprises a front structure assembly configured to partially support the headlamp assembly. The conventional type of scooter type vehicle includes the front structure assembly comprising a larger surface area. Upon damage to the front structure assembly either due to external factors or the internal factors, entire front structure assembly has to be replaced. Even if only a portion of the front structure assembly is damaged, the entire front structure assembly has to be replaced which results in additional cost to the rider. Another challenge with the front structure assembly of the scooter type vehicle is the difficulty of assembly of body panels and rigidity of the structure.

The front structure includes a front panel configured to cover front portion of the body of the vehicle. However, the front panel made as a single piece will usually be huge and assembly of such a front panel on to the vehicle is difficult. The front panel manufactured as a single part tends to have high warpage, poor fitting with the adjoining body panels leading to increased cycle time during assembly, undesired gaps between the body panels leading to poor fit and finish that results in poor aesthetic appeal. Further, the poor fit and finish also gives scope to vibration and noise related adverse effects. Furthermore, to overcome the above said drawbacks, if the front panel is split into multiple parts, the cost of manufacture increases substantially due to number of parts and further adverse impact on assembly as well as manufacturing also occurs.

Therefore, an effective cooling of the internal parts concealed completely or partially by the body panels in the scooter type vehicle is required which is easy to assembly as well as easy to manufacture. Furthermore, there is a need to prevent replacement of the entire front structure assembly upon damage of a portion of the front structure assembly.

To overcome all the above-mentioned challenges, the present invention provides a step-through scooter type vehicle, wherein said one or more front bottom panels, said top front panel and a rear cover form an inner chamber within which the rear portion of the headlamp assembly is concealed, and the tapered portion comprises at least one cut-out to receive at least one louvre disposed at a close proximity to said headlamp assembly and capable of directing air towards the inside of the inner chamber for cooling the headlamp assembly.

According to an embodiment of the present invention, one or more bottom panels are disposed rearwardly and on sideward to a front wheel of the vehicle. The one or more front bottom panels are adjoiningly disposed below the top front panel of the vehicle.

According to the present invention, the one or more front bottom panels, the top front panel and a rear cover form an inner chamber. The inner chamber conceals the rear portion of the headlamp assembly there within. According to the present invention, the heat dissipated by the headlamp assembly is spread or released into the inner chamber. In order to facilitate cooling of the headlamp assembly, the one or more front bottom covers comprise at least one louvre capable of directing the atmospheric air inside the inner chamber.

According to the present invention, the one or more front bottom covers includes a tapered portion disposed at a joining junction between at least a portion of the top front panel and at least a portion of the one or more front bottom covers. The tapered portion includes one or more cut outs configured to allow travelling wind inside the inner chamber.

According to the present invention, the one or more cut outs receive at least one louvre. The at least one louvre is capable of directing the air towards the inside of the inner chamber.

According to another embodiment of the present invention, at least one louvre includes at least one opening to allow the atmospheric air to pass through.

According to an embodiment of the present invention, the inner chamber extends towards floorboard assembly. The inner chamber transfers the atmospheric air from rear portion of the headlamp assembly towards the floorboard assembly. The atmospheric air further travels towards the cylinder head portion of the engine assembly.

According to an embodiment of the present invention, the at least one louvre includes a tag like structure- an extension member configured to enable attachment with at least one boss disposed on an inner surface of the one or more front bottom covers.

According to an embodiment of the present invention, the at least one louvre is detachably attached to an inner surface of the one or more front bottom panels.

According to an embodiment of the present invention, the tapered portion of the one or more front bottom panels is of an arrow-head shape and the at least one opening is also the shape of an arrow head to be in conformation with the shape of the tapered portion of the one or more front bottom panels.

According to an embodiment of the present invention, in the joining portion of the top front panel and the one or more front bottom panels, at least a portion of the one or more front bottom panels overlaps over at least a peripheral portion of the top front panel. The overlapping prevents any see through gaps in the joining portion and prevents entry of mud, dust, water and any other foreign particles. Thereby protecting the sensitive and important parts like, a battery unit from corroding and any other damages. As per another embodiment of the present invention, the top front panel as well as the bottom front panel are provisioned with one or more locating lugs that are securely received by the one or more locating slots in the left front bottom panel respectively.

The previously mentioned and other advantages of the present subject matter would be described in detail in conjunction with the figures in the following description.

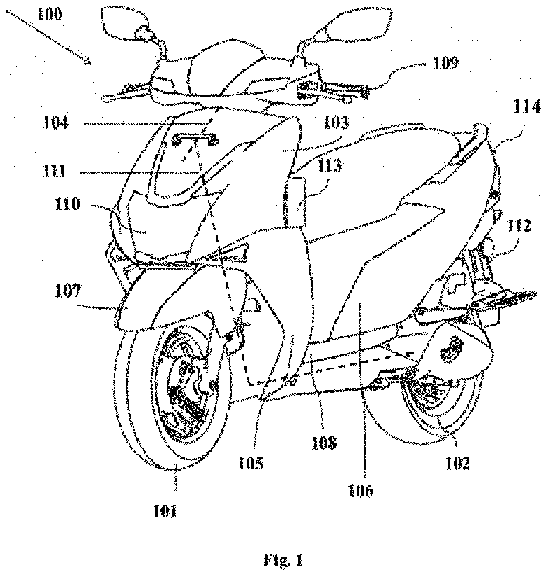

**Fig. 1** shows a side view of the scooter type vehicle. The vehicle has a body frame assembly made up of several tubes welded together which usually supports the body of the vehicle. The vehicle has a steerable front wheel **101** and a driven rear wheel **102.** The body frame assembly of the vehicle is an elongated structure, which typically extends from a forward end to a rearward end of the vehicle. It is generally convex in shape, as viewed from a side elevation view. The said frame assembly includes a head tube **104,** a main frame **111** and also may have a sub-frame. The sub-frame is attached to the main frame using appropriate joining mechanism. The frame assembly is covered by a plurality of vehicle body covers including a top front panel **103,** a rear cover **113,** a left bottom front panel **105,** and a side panel **106.**

A handlebar assembly **109** and a seat assembly (not shown) are supported at opposing ends of the frame assembly and a generally open area is defined there between known as floorboard **108** which functions as a step through space. The seat for a driver and a pillion is placed forward to a fuel tank and rear side of the floorboard **108.** A front fender **107** is provided above the front wheel **101** to avoid the vehicle **100** and its occupants from being splashed with mud. Likewise, a rear fender **112** is placed between a fuel tank (not shown) and the rear wheel **102,** and to the outer side in the radial direction of the rear wheel **102.** A rear fender **112** inhibits rain water or the like from being thrown up by the rear wheel **102.**

Suspensions are provided for comfortable steering of the vehicle on the road. A front suspension assembly (not shown) is connected to a front fork (not shown). The rear suspension assembly comprises of at least one rear suspension (not shown) preferably on the left side of the vehicle. However, a vehicle with two rear suspensions, namely on the left side and the right side is also possible. For the safety of the user and in conformance with the traffic rules, a headlamp assembly **110** in the front portion of the vehicle and a taillight **114** in the rear portion of the vehicle is also provided.

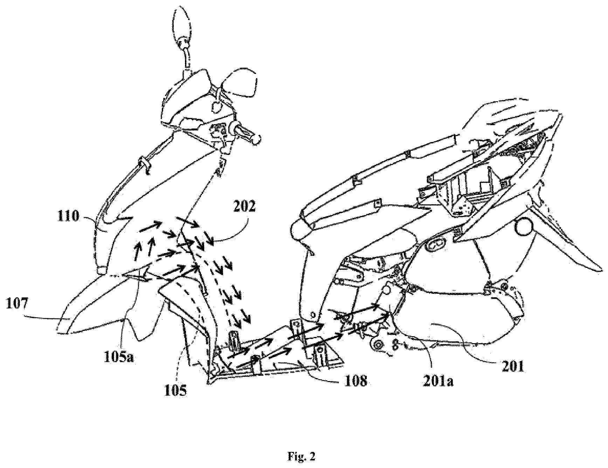

**Fig. 2** illustrates an air flow path through the front bottom panel towards the engine assembly. According to an embodiment of the present invention, the left bottom front panel **105** includes at least one louvre **105a** configured to receive atmospheric air towards inside chamber disposed rearwardly to the headlamp assembly **110.** The air flow path **202** enters the rearward portion of the headlamp assembly **110,** the air gets heated up due to heat dissipated by the headlamp assembly **110** and the heated air moves downwards towards the floorboard assembly **108.** Further, the air travels towards a cylinder head portion **201a** of the engine assembly **201.** The heated air travelling through the floorboard portion **108** gets cooled while traversing and comparatively cooler air travels towards the cylinder head portion **201a.** The at least one louvre **105a** is disposed such that its at least one opening (not shown) at the inlet is substantially facing downward with an angular intake passage oriented at an angle α, in particular, about 45 degrees with respect to a horizontal plane. The intake passage as seen in the figure is disposed such that its contour follows the contour of the front fender **107** and overlaps with an upstream profile of the front fender **107.** This enables smooth and maximum flow of the frontal air drag that is to be ducted through the at least one louvre **105a.**

According to an embodiment of the present invention, the heat dissipated by the plurality of LEDs present in the rear portion of the headlamp assembly **110** is cooled by the atmospheric air entering from the at least one louvre **105a.** The substantially up-down direction opening of the louvre enables channelizing the air towards the illumination light of the vehicle to enable effective cooling.

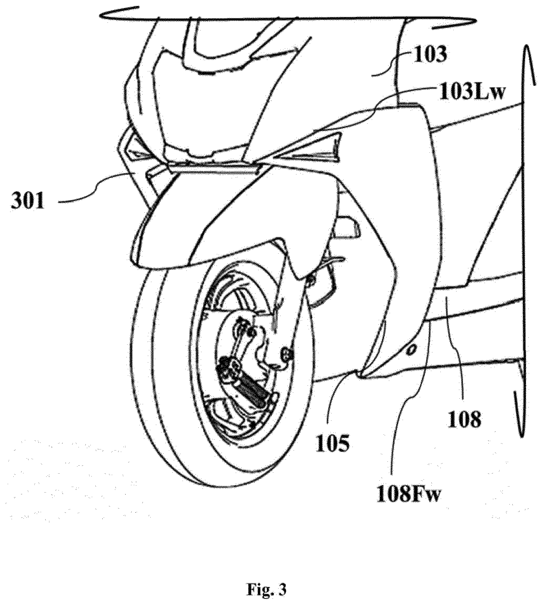

**Fig. 3** illustrates a portion of a perspective view of the scooter type vehicle. According to an embodiment of the present invention, the left bottom panel **105** extends vertically downward from a lowermost surface **103Lw** of the top front panel **103.** Further, the left bottom panel **105** extends rearwardly and downwardly from the lowermost surface **103Lw** to a forward most edge **108Fw** of the floorboard assembly **108.** The left bottom panel **105** extending rearwardly and downwardly substantially covers most portion of the rider's legs disposed on the floorboard assembly **108** during vehicle riding condition. Furthermore, the left bottom panel and likewise, the right bottom panel **301** together add to the aesthetic appeal of the vehicle.

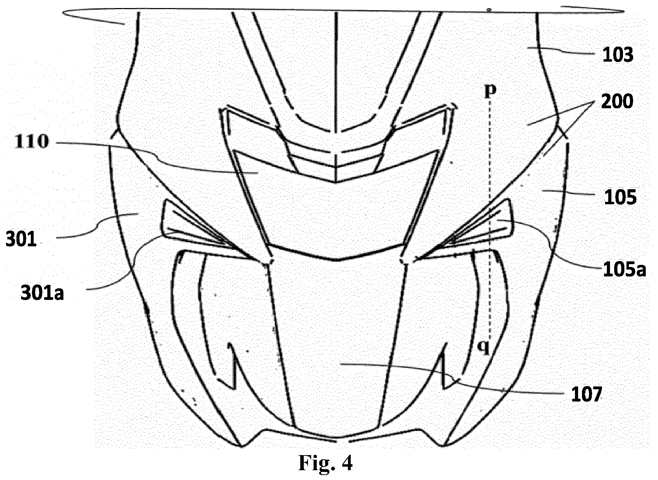

**Fig. 4** illustrates a front view of a front portion of the vehicle. According to an embodiment of the present invention, the vehicle **100** comprises one or more front bottom panels. The one or more bottom front panels **105, 301** include the right front bottom panel **301** and the left bottom panel **105.** The one or more bottom front panels **105, 301** include at least one louvre **105a** and **301a** respectively. The at least one louvre **105a** and **301a** are disposed at a close proximity to the headlamp assembly **110.** The atmospheric air received by the at least one louvre **105a** and **301a** is circulated in the inner chamber comprising the rear portion of the headlamp assembly **110.** The air circulation facilitates cooling of the heated LEDs of the headlamp assembly **110.**

According to another embodiment of the present invention, the one or more bottom front panels **105, 301** are disposed rearwardly to and on either sides of the front wheel **101.** The one or more bottom front panels **105, 301** protect the legs of the rider disposed on the floorboard assembly (not shown) during riding conditions. The one or more bottom front panels **105, 301** encounter the mud, dust, water particles, and any other foreign materials picked up by the front wheel **101** and splashed rearwardly during vehicle running condition. Thereby, preventing the same from reaching the rider.

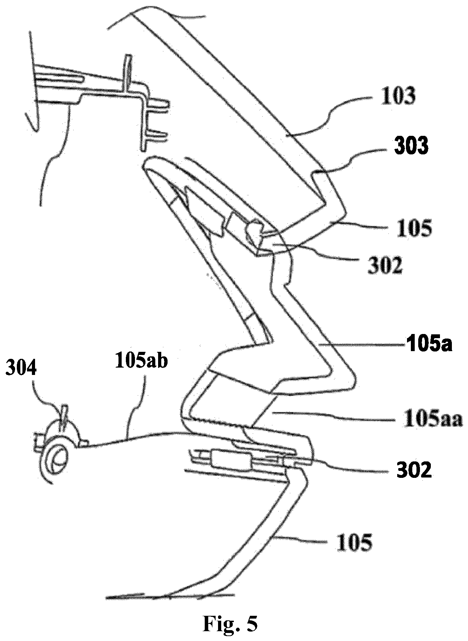

**Fig. 5** illustrates a sectional view of the at least one louvre assembled with the one or more front bottom panels taken along **pq** axis as shown in the **Fig. 4****.** According to an embodiment of the present invention, the at least one louvre **105a** is detachably attached to the one or more front bottom panels **105.** In particular, the at least one louvre **105a** is snap fitted to one or more portions of the left bottom front panel **105.** The snap fit leads to overlap **302** between the at least one louvre **105a** and the one or more portions of the left bottom front panel **105** ensures effective fit and finish and prevents any see through gaps.

According to another embodiment of the present invention, the at least one louvre **105a** includes at least one opening **105aa** configured to receive atmospheric air. The at least one louvre **105a** includes an extension member **105ab** enabling detachable attachment of the at least one louvre **105a** to the rear surface of the left bottom front panel **105.**

According to another embodiment of the present invention, the rear surface of the left bottom front panel **105** includes one or more bosses **304** configured to receive the extension member **105ab.** In addition to the overlap **302, the** at least one louvre **105a** is also screwed to the one or more bosses **304** to ensure effective fitment and achieve efficient fit and finish.

According to another embodiment of the present invention, at least a portion of the top front panel **103** and at least a portion of the left bottom front panel **105** overlap over each other. The overlapped portion **303** prevents gaps there between and also prevents entry of dust, mud, water particles, and any other foreign particles from entering. The overlapped portion **303** also achieves better fit and finish and accounts to aesthetic appeal of the vehicle.

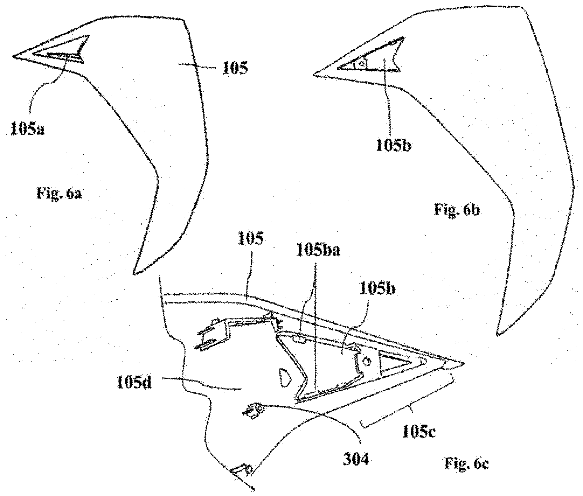

**Fig. 6a** illustrates a front view of a left front bottom panel according to an embodiment of the present invention. The left front bottom panel is configured to receive the at least one louvre **105a.** The at least one louvre **105a** is received by at least one cutout **105b** provided in at least a portion of the left bottom front panel **105** as shown in **Fig 6b****.** The at least one louvre **105a** is further detachably attached to the one or more boss **304** disposed on the rear surface **105d** of the left bottom front panel **105** as shown in the **Fig. 5c**. In particular, the at least one louvre **105a** is attached to a tapered portion **105c** of the left bottom front panel **105.** The at least one cutout **105b** includes one or more projections **105ba** enabling snap fit with the associated part, in particular, with the at least one louvre.

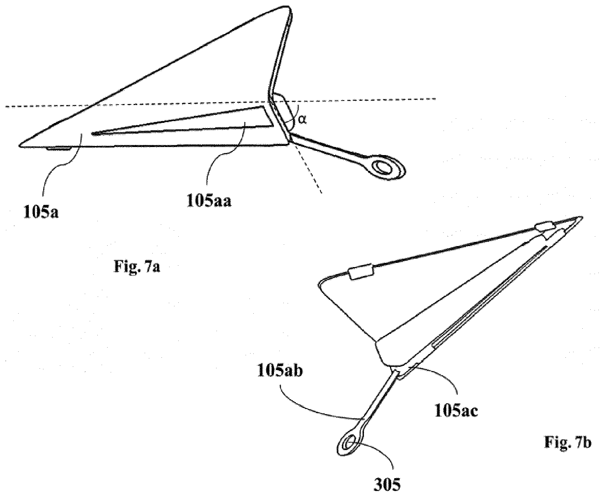

**Fig. 7a** illustrates a front perspective view of the at least one louvre according to an embodiment of the present invention. The at least one louvre **105a** is in the shape of an arrow head. The at least one louvre **105a** is configured to being accommodated in the cutout of the tapered portion of the left front bottom panel (not shown). According to another embodiment of the present invention, the at least one louvre **105a** includes at least one opening **105aa** capable of receiving the atmospheric air. The at least one opening **105aa** at the inlet is substantially facing downward with an angular intake passage oriented at an angle α, in particular, about 45 degrees with respect to a horizontal plane.

Furthermore, according to another embodiment of the present invention, the at least one louvre **105a** includes the extension member **105ab** projecting outwardly from a rear-louvre surface **105ac** as shown in **Fig. 7b****.** The extension member **105ab** includes at least one hole **305** enabling detachable attachment of the at least one louvre **105a.**

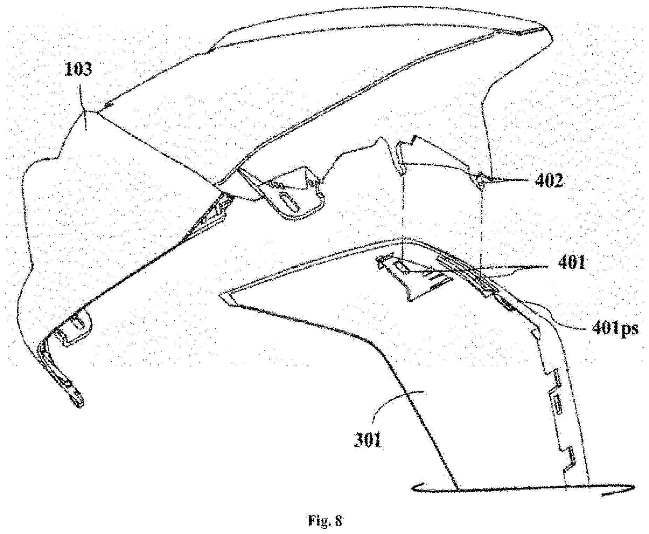

**Fig. 8** illustrates a detailed view of a portion of the top front panel and the left front bottom panel. According to an embodiment of the present invention, the top front panel **103** includes one or more locating lugs **402** configured to be accommodated by one or more locating slots **401** disposed on a peripheral surface **401ps** of the left front bottom panel **301.** The one or more locating lugs **402** are securely received by the one or more locating slots **401,** which keeps the left front bottom panel **301** secured to the top front panel **103.** The one or more locating lugs **402** and the one or more locating slots **401** provides better fit and finish between the body panels.

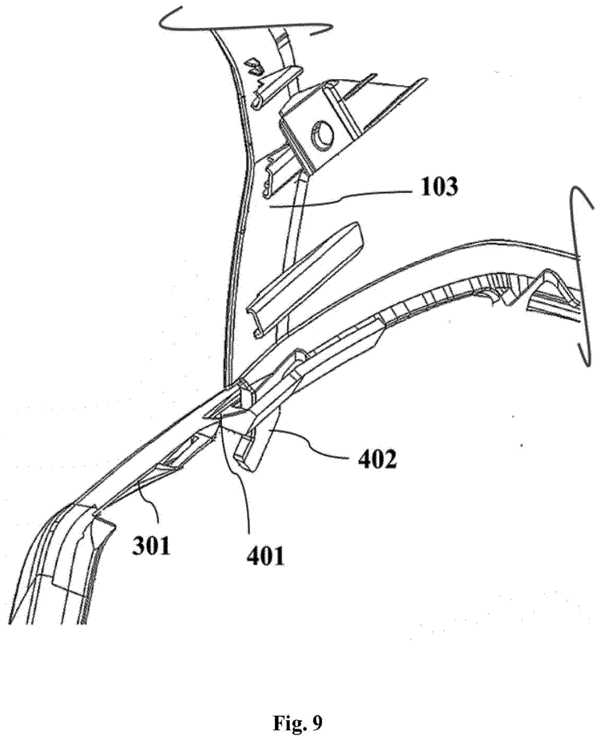

**Fig. 9** illustrates a detailed view of an assembly of a portion of the top front panel and the left front bottom panel. The one or more locating lugs **402** on the top front panel **103** are securely received by the one or more locating slots **401** in the left front bottom panel **301.** The one or more locating lugs **401** are of a predetermined height, which can easily protrude inside the one or more locating slots **401** during assembly. This saves the time during assembly of the body panels and in addition, also provides stable assembly and better fit and finish between the top front panel **103** and the left front bottom panel **301.**

## Claims

1. A step-through scooter type vehicle (100) comprising:
a handlebar assembly (109);
a headlamp assembly (110) disposed below said handlebar assembly (109);
a front structure assembly (200) including a top front panel (103) configured to support at least a portion of said headlamp assembly (110); and
an engine assembly (201) disposed rearwardly to a floorboard assembly (108) extending rearwardly from said front structure assembly (200),
wherein said front structure assembly (200) comprises one or more front bottom panels (105, 301) extending vertically downwards from a lowermost surface (103Lw) of the top front panel (103) and rearwardly downwardly from the lowermost surface (103Lw) to a forward most edge (108Fw) of the floorboard assembly (108), and
wherein said one or more front bottom panels (105, 301) includes a tapered portion (105c) disposed at a joining junction between at least a portion of the top front panel (103) and at least a portion of said one or more front bottom panels (105, 301), **characterized in that** said one or more front bottom panels (105, 301), said top front panel (103) and a rear cover (113) form an inner chamber within which the rear portion of the headlamp assembly (110) is concealed, and
the tapered portion (105c) comprises at least one cut-out (105b) to receive at least one louvre (105a, 301a) disposed at a close proximity to said headlamp assembly (110) and capable of directing air towards the inside of the inner chamber for cooling the headlamp assembly (110).

2. The step-through scooter type vehicle (100) as claimed in claim 1, wherein said at least one louvre (105a) includes an extension member (105ab) projecting outwardly from a rear-louvre surface (105ac).

3. The step-through vehicle (100) as claimed in claim 1, wherein at least a portion of said at least one louvre (105a, 301a) is configured to overlap (302) with one or more portions of said one or more bottom front panels (105, 301).

4. The step-through scooter type vehicle (100) as claimed in claim 1, wherein said top front panel (103) includes one or more locating lugs (402), said one or more locating lugs (402) include a predetermined height.

5. The step-through scooter type vehicle (100) as claimed in claim 1, wherein said one or more bottom front panels (105, 301) include one or more locating slots (401) disposed on a peripheral surface (401ps) at a close proximity to said top front panel (103) in an assembled condition.

6. The step-through scooter type vehicle (100) as claimed in claim 1, wherein said one or more bottom front panels (105, 301) are fixedly attached to said top front panel (103).

7. The step-through scooter type vehicle (100) as claimed in claim 1, wherein said at least one louvre (105a, 301a) includes at least one opening (105aa), said at least one opening (105aa) is substantially facing downward at an angle α being about 45 degrees with respect to a horizontal plane.

8. The step-through scooter type vehicle (100) as claimed in claim 1 or claim 2, wherein said one or more bottom front panels (105, 301) includes a rear surface (105d) comprising one or more bosses (304) configured to receive a tag-like structure (105ab) enabling detachable attachment of said at least one louvre (105a) to the rear surface (105d).

9. The step-through scooter type vehicle (100) as claimed in claim 4 and claim 5, wherein said one or more locating lugs (402) are configured to be received by said one or more locating slots (401).

## Patentansprüche

1. Rollerartiges Fahrzeug (100) mit tiefem Einstieg, umfassend:
eine Lenkeranordnung (109);
eine Scheinwerferanordnung (110), die unter der Lenkeranordnung (109) angeordnet ist;
eine Frontstrukturanordnung (200), die eine obere Frontblende (103) aufweist, die dafür ausgelegt ist, mindestens einen Abschnitt des Scheinwerferanordnung (110) zu stützen; und
eine Motoranordnung (201), die hinter einer Bodenblendenanordnung (108) angeordnet ist, die sich von der Frontstrukturanordnung (200) nach hinten erstreckt,
wobei die Frontstrukturanordnung (200) eine oder mehrere vordere Bodenblenden (105, 301) umfasst, die sich von einer untersten Fläche (103Lw) der oberen Frontblende (103) vertikal nach unten und von der untersten Fläche (103Lw) nach hinten und unten zu einer vordersten Kante (108Fw) der Bodenblendenanordnung (108) erstrecken, und
wobei die eine oder die mehreren vorderen Bodenblenden (105, 301) einen sich verjüngenden Abschnitt (105c) aufweisen, der an einer Verbindungsstelle zwischen mindestens einem Abschnitt der oberen Frontblende (103) und mindestens einem Abschnitt der einen oder der mehreren vorderen Bodenblenden (105, 301) angeordnet ist,
**dadurch gekennzeichnet, dass**
die eine oder die mehreren vorderen Bodenblenden (105, 301), die obere Frontblende (103) und eine hintere Abdeckung (113) eine Innenkammer bilden, in der der hintere Abschnitt der Scheinwerferanordnung (110) verborgen ist, und
der sich verjüngende Abschnitt (105c) mindestens einen Ausschnitt (105b) zur Aufnahme mindestens einer Lüftungslamelle (105a, 301a) umfasst, der in unmittelbarer Nähe der Scheinwerferanordnung (110) angeordnet ist und in der Lage ist, Luft zum Kühlen der Scheinwerferanordnung (110) in den Innenraum der Innenkammer zu leiten.

2. Rollerartiges Fahrzeug (100) mit tiefem Einstieg nach Anspruch 1, wobei die mindestens eine Lüftungslamelle (105a) ein Verlängerungselement (105ab) aufweist, das von einer hinteren Lüftungslamellenfläche (105ac) nach außen vorsteht.

3. Rollerartiges Fahrzeug (100) mit tiefem Einstieg nach Anspruch 1, wobei mindestens ein Abschnitt der mindestens einen Lüftungslamelle (105a, 301a) dafür ausgelegt ist, einen oder mehrere Abschnitte der einen oder der mehreren unteren Frontblenden (105, 301) zu überlappen (302).

4. Rollerartiges Fahrzeug (100) mit tiefem Einstieg nach Anspruch 1, wobei die obere Frontblende (103) eine oder mehrere Haltenasen (402) aufweist, wobei die eine oder die mehreren Haltenasen (402) eine vorbestimmte Höhe aufweisen.

5. Rollerartiges Fahrzeug (100) mit tiefem Einstieg nach Anspruch 1, wobei die eine oder die mehreren unteren Frontblenden (105, 301) eine oder mehrere Halteschlitze (401) umfassen, die in einem zusammengebauten Zustand auf einer Umfangsfläche (401ps) in unmittelbarer Nähe der oberen Frontblende (103) angeordnet sind.

6. Rollerartiges Fahrzeug (100) mit tiefem Einstieg nach Anspruch 1, wobei die eine oder die mehreren unteren Frontblenden (105, 301) fest an der oberen Frontblende (103) angebracht sind.

7. Rollerartiges Fahrzeug (100) mit tiefem Einstieg nach Anspruch 1, wobei die mindestens eine Lüftungslamelle (105a, 301a) mindestens eine Öffnung (105aa) umfasst, wobei die mindestens eine Öffnung (105aa) im Wesentlichen nach unten weist, in einem Winkel a, der in Bezug auf eine horizontale Ebene etwa 45 Grad beträgt.

8. Rollerartiges Fahrzeug (100) mit tiefem Einstieg Anspruch 1 oder Anspruch 2, wobei die eine oder die mehreren unteren Frontblenden (105, 301) eine hintere Fläche (105d) aufweisen, die einen oder mehrere Ansätze (304) umfasst, die dafür ausgelegt sind, eine anhängerähnliche Struktur (105ab) aufzunehmen, die eine lösbare Anbringung der mindestens einen Lüftungslamelle (105a) an der hinteren Fläche (105d) ermöglicht.

9. Rollerartiges Fahrzeug (100) mit tiefem Einstieg nach Anspruch 4 und Anspruch 5, wobei die eine oder die mehreren Haltenasen (402) dafür ausgelegt sind, von dem einen oder den mehreren Halteschlitzen (401) aufgenommen zu werden.

## Revendications

1. Véhicule de type scooter avec repose-pied (100) comprenant:
un ensemble de guidon (109);
un ensemble de phare (110) disposé sous ledit ensemble de guidon (109);
un ensemble de structure avant (200) comprenant un panneau avant supérieur (103) configuré pour supporter au moins une partie dudit ensemble de phare (110); et un ensemble moteur (201) disposé vers l'arrière par rapport à un ensemble de plancher (108) s'étendant vers l'arrière depuis ledit ensemble de structure avant (200), dans lequel ledit ensemble de structure avant (200) comprend un ou plusieurs panneaux inférieurs avant (105, 301) s'étendant verticalement vers le bas à partir d'une surface la plus basse (103Lw) du panneau avant supérieur (103) et vers l'arrière vers le bas depuis la surface la plus basse (103Lw) jusqu'à un bord le plus en avant (108Fw) de l'ensemble de plancher (108), et
dans lequel lesdits un ou plusieurs panneaux inférieurs avant (105, 301) incluent une partie conique (105c) disposée au niveau d'une jonction de jointure entre au moins une partie du panneau avant supérieur (103) et au moins une partie desdits un ou plusieurs panneaux inférieurs avant (105, 301), **caractérisé en ce que**
lesdits un ou plusieurs panneaux inférieurs avant (105, 301), ledit panneau avant supérieur (103) et un couvercle arrière (113) forment une chambre intérieure à l'intérieur de laquelle la partie arrière de l'ensemble de phare (110) est dissimulée, et la partie conique (105c) comprend au moins une découpe (105b) pour recevoir au moins une grille (105a, 301a) disposée à proximité immédiate dudit ensemble de phare (110) et capable de diriger l'air vers l'intérieur de la chambre intérieure pour refroidir l'ensemble projecteur (110).

2. Véhicule de type scooter avec repose-pied (100) selon la revendication 1, dans lequel ladite au moins une grille (105a) comprend un élément d'extension (105ab) faisant saillie vers l'extérieur depuis une surface de grille arrière (105ac).

3. Véhicule avec repose-pied (100) selon la revendication 1, dans lequel au moins une partie de ladite au moins une grille (105a, 301a) est configurée pour chevaucher (302) une ou plusieurs parties desdits un ou plusieurs panneaux avant inférieurs (105, 301).

4. Véhicule de type scooter avec repose-pied (100) selon la revendication 1, dans lequel ledit panneau avant supérieur (103) comprend une ou plusieurs pattes de positionnement (402), lesdites une ou plusieurs pattes de positionnement (402) ayant une hauteur prédéterminée.

5. Véhicule de type scooter avec repose-pied (100) selon la revendication 1, dans lequel lesdits un ou plusieurs panneaux avant inférieurs (105, 301) comprennent une ou plusieurs fentes de positionnement (401) disposées sur une surface périphérique (401ps) en une proximité étroite avec ledit panneau avant supérieur (103) dans un état assemblé.

6. Véhicule de type scooter avec repose-pied (100) selon la revendication 1, dans lequel lesdits un ou plusieurs panneaux avant inférieurs (105, 301) sont fixés de manière fixe audit panneau avant supérieur (103) .

7. Véhicule de type scooter avec repose-pied (100) selon la revendication 1, dans lequel ladite au moins une grille (105a, 301a) comprend au moins une ouverture (105aa), ladite au moins une ouverture (105aa) étant substantiellement tournée vers le bas à un angle α étant d'environ 45 degrés par rapport à un plan horizontal.

8. Véhicule de type scooter avec repose-pied (100) selon la revendication 1 ou la revendication 2, dans lequel lesdits un ou plusieurs panneaux avant inférieurs (105 301) comprennent une surface arrière (105d) comprenant un ou plusieurs bossages (304) configurés pour recevoir une structure en forme d'étiquette (105ab) permettant une fixation détachable de ladite au moins une grille (105a) à la surface arrière (105d).

9. Véhicule de type scooter avec repose-pied (100) selon la revendication 4 et la revendication 5, dans lequel lesdites une ou plusieurs pattes de positionnement (402) sont configurées pour être reçues par lesdites une ou plusieurs fentes de positionnement (401).
